Europäisches Patentamt

European Patent Office

Office européen des brevets

(11) Publication number: **0 337 961**
**A1**

# (12) EUROPEAN PATENT APPLICATION

(21) Application number: 89830152.8

(22) Date of filing: 07.04.89

(51) Int. Cl.⁴: **E 04 B 1/19**
**F 16 B 7/04**

(30) Priority: 08.04.88 IT 2014288

(43) Date of publication of application:
18.10.89 Bulletin 89/42

(84) Designated Contracting States:
AT BE CH DE ES FR GB GR LI LU NL SE

(71) Applicant: **Fedon, Raffaele**
**Via Valsugana, 70**
**Castelfranco Veneto (TV) (IT)**

(72) Inventor: **Spinelli,Alberto**
**Via Cesariano, 9**
**Milano (IT)**

(74) Representative: **Adorno, Silvano et al**
**c/o SOCIETA' ITALIANA BREVETTI S.p.A. Via Carducci, 8**
**I-20123 Milano (IT)**

(54) **Nodal element for lattice spatial structures with ribbed profile rods.**

(57) A nodal element (1) and its principal assembly elements for a lattice spatial structure is described, with ribbed rods (10, 10') that is with any profile that is not smooth, even formed with recesses, but preferably constituted by pseudo-threaded bars in high resistance steel. The nodal element consists of two hemispheres (1a, 1b) substantially solid full, with a flanged, bolted joint (2) on the equatorial plane, with shaped internal seats (4, 4') threaded for example, but in any case such as to house, with blocking, the stringer rods (10) of the structure at right angles to each other, not on the same plane but displaced with respect to said equatorial plane. The same also contains radial threaded blind holes (13) in at least one of the hemispheres for joining the diagonal rods (10') using connecting sleeves (11) and stud bolts (12). Tubular coverings (6) are envisaged which have essentially a protective function and as a control template for the free length of rod, or having a static function for rods loaded by compression.

Fig.2

**Description**

## NODAL ELEMENT FOR LATTICE SPATIAL STRUCTURES WITH RIBBED PROFILE RODS

This invention relates to a nodal element for lattice spatial structures with ribbed profile rods, and also various assembly elements for completing the structure.

It is known that at present there are various solutions to the problem of obtaining three dimensional or spatial structures for covering medium/large areas, such as to distribute the stress forces in the three fundamental directions, what nowadays it is possible to determine using computerised calculation systems. The various structural schemes used up till now basically differ among themselves as regards to the knot. Nodal elements can be simple welded sleeves, which may be connected by external threading to the rods, forming prefabricated pyramids with square bases, or consist of two hollow hemispheres joined by welding and reinforced by a circular disk onto which the rods are welded directly, or even knots with profiled channels into which the flattened ends of tubular rods are forced and then locked with bolted plates.

All these implementation examples, together with other ones, of simple nodal elements show however, the disadvantage of not being able to exploit a precise dimensioning of the elements in function of the exerted stresses, as it would be possible, thanks to the now available electronic computers. Furthermore they have the disadvantage of only being able to give constant structural heights or at the most to the formation of segments parallel to each other articulated in various ways, with serious limits to the freedom in spatial design.

Greater design freedom may be obtained with the spatial structural scheme universally known as the "MERO(R) system" which uses as a joint or knot a solid sphere with radial threaded holes for the joining of several rods which converge on the knot, fitted with conical connections at their ends. Apart from the labour required in finishing operations of the sphere and the exact sequence of progress that must be followed during the phase of assembling the components, there is in any case the problem that it is practically difficult to replace any rod within the structure which may be necessary, for example, due to a manufacturing defect or to incorrect assembly.

Another type of knot which was intended to resolve these known technical problem was that which is disclosed by European patent application No.89830153.6, which can be defined as "hinged" due to the possibility of varying the angles of the rods relative to each knot, and which consists of hollow spherical segments. However, also in this case, the intrinsic difficulty in precisely determining the angle of each rod, the unavoidable limitations to the variability of these angles, onviously being impossible to have oversized slots on the sphere, and the burden of having coaxial rods with conical connecting elements suggest that other solutions to the problem should be sought, which which may be more economical while retaining the characteristics of being able to fully exploit the capacities of computerised structural calculations.

One object of this invention is therefore that of supplying a lattice spatial structure, and its nodal elements in particular, such as to overcome the aforementioned technical problems by the use of continuous ribbed rods available in any length by cutting according to the size.

Thus a spherical nodal element is obtained consisting of two substantially solid hemispheres, flanged across a diametral plane through and able to be screwed together through the flanges, each formed with two impressions at right angles to each other, adapted to form when screwed together the support housings for two concurrent ribbed rods, crossing and superimposed upon each other, in correspondence with the centre of the sphere, from opposite positions relative to said diametral plane, the said sphere in addition having on at least one hemisphere several threaded blind radial holes for fixing the ends of diagonal ribbed rods by means of stud bolts, using double threaded connecting sleeves.

According to a particular aspect of this invention said continuous ribbed rods are formed of pseudo-threaded bars, in articular of the type known as "DYWIDAG" or "GEWI". In this case the seats formed within the spherical knot have threaded surfaces for blocking the stringers. On the other hand the bars need not be necessarily limited to this type of ribbing, which can instead be of any type, in a longitudinal, circumferential or radial direction, and even obtained by notching or channelling in the profile of the said bars. According to this invention they simply must not be smooth and the right angled, superimposed impressions in the spheres will have a complementary shape to that of the bars so as to block them by restaint.

According to another aspect of this invention tubular coverings of the stringers or main rods are provided which possibly should they be stressed with compression, give their contribution in reacting to the assigned forces, since they are preferably formed of coaxial tubular elements with the rods themselves to which they are fixed by header flanges located on the rods in proximity of the knot by joining and blocking sleeves. Said tubular elements are preferably in steel, either zinc plated or stainless, aluminium or glass fibre. Should they not be required to fulfil a mechanical support operation but merely a covering function of aesthetic or protective nature or even assimilable as to the function of a template to check the free lengths of the rods, said tubular elements can be, for example, of aluminium, rigid PVC or fibre-cement.

In this way planar lattice spatial structures may be obtained whose links(of triangular, square, rectangular shape etc.) are provided with the characteristics of stringer continuity, both upper and lower, without the intervention of nodal interruptions. In fact the spherical knots do not interrupt the continuity of the bars which form the virtual stringers, but have the sole function of junction pseudo-sleeves into which converge the truncated bars of the diagonal rods, thus forming the lattice structure.

Since it has been possible to find that lattice rods in spatial structures are mainly stressed by tensile strength and only negligibly by compression, when using suitable checking calculations it is possible to localise the strains with certainty and to identify the components under tensile or compressive stress in a broad range of different loading conditions, thus excluding any uncertainty of behaviour even in case of variations in the operational conditions. In this way it is possible to determine which rods can be left bare (only traction) and which should be integrated with the aforementioned tubular elements having a static function.

In addition it should be noted that the nodal elements according to this invention give rise to a displacement of the stringers or main rods owing to the superimposition of these in correspondence of the knots. Since in spatial structures the nodal behaviour should be that of balancing the forces transmitted by the rods directed to the centre of the knot by means of the "knots displacement method", in the calculation procedure for the determination of forces, account will be thus taken of the displacement of stringers by redirecting the forces from their "virtual centre" to the "knot centre". Thus the so-called knot "displacement method" will be adopted, also noting for each of them the relevant equations for "balance of moments", according to this invention, due to the superimposed cross-over conditions of the stringers at the knots.

Further aspects and characteristics of this invention will be clearer to those skilled in the art from the following description of one preferred embodiment thereof given by way of a non-limiting example, with reference to the attached drawings in which:

FIGURE 1 shows a perspective view of a nodal half-element, according to this invention;

FIGURE 2 shows a sectional view of an example of stringers and diagonal rods converging onto a knot; and

FIGURE 3 shows an example of a lattice spatial structure obtained according to this invention.

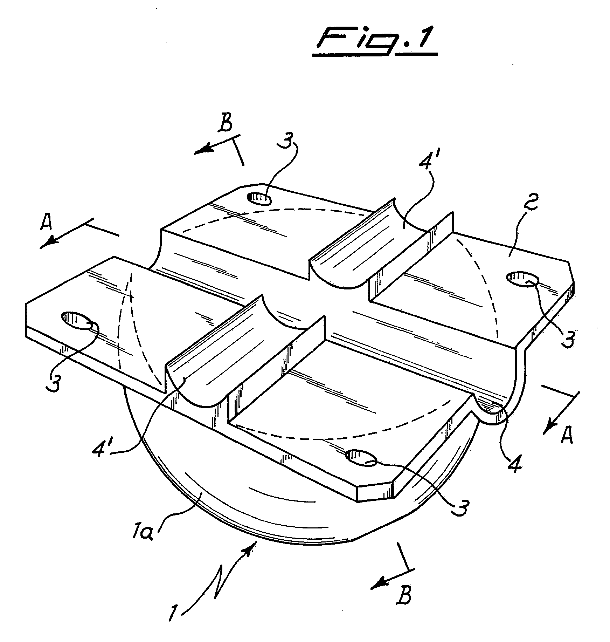

With reference to Fig. 1, the fundamental element for obtaining the structure according to this invention is the knot 1 formed of the two solid hemispheres 1a and 1b having, in correspondence with the diameter, a flange 2 for joining the two hemispheres together using screws through the holes 3 provided in said flanges. Two seats with a U-shaped cross-section, at right angles to each other and superimposed are formed, respectively recessed and upraised with respect to said flange, so that, on joining together the two hemispheres, two crossing tracked channels at different levels for blocking the junction of the continuous ribbed rods 10. These are made of high resistance steel bars, possibly with electrolytic zinc plating, and having surface ribbing, preferably in the form of long pitch pseudo-threading. In this case they are the well-known "DYWIDAG" or "GEWI" rods which have precise dimensional and mechanical characteristics, available to users. In this case also the seats 4 and 4' will have a right or left handed pseudo-thread complementary to that of the bars for their jointing.

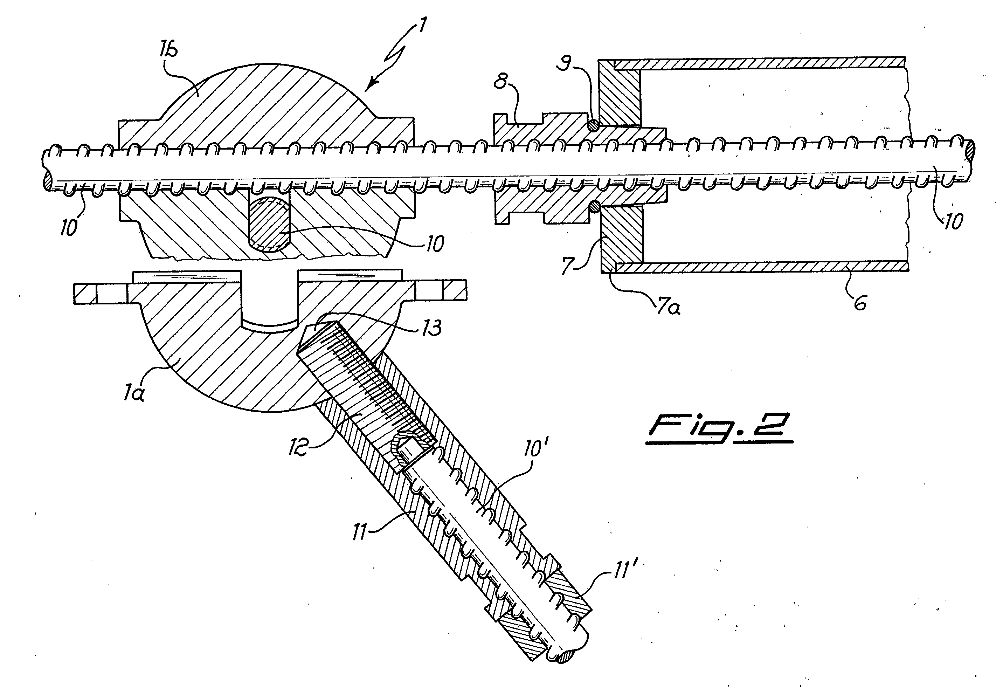

In the upper part of Fig. 2 is shown a cross-section taken along the plane A-A shown in Fig. 1 perpendicular to flange 2 and passing through the axis of seat 4. In the lower part of the same Fig. 2 is shown a partial cross-section of the knot, taken along the plane B-B, also shown in Fig. 1, which intersects flange 2 perpendicularly along one of its diagonals. Thus the crossover of the two rods superimposed on each other is clearly seen in correspondence with the equatorial plane of the sphere 1 so as to have their nearest approach point corresponding to the centre of the said sphere. Rods 10 have been shown as being of the "DYWIDAG" or "GEWI" type, but naturally they could be formed with a different type of ribbing and in this case seats 4 and 4' will show patterns of a complementary shape to said ribbing which, in general, can be of any type, having either projections or cavities which are repeated periodically in a uniform way on the surface.

Fig. 2 also shows around one of the two longitudinal stringers 10, and specifically the one parallel to the plane of the sheet, a tubular element 6, applied coaxially to the bar itself to which it is fixed by two header flanges 7, one of which can be seen in the figure with a peripheral lip 7a for restraining the tubular profile and with a central hole for the passage of the rod, as well as for locking a connecting sleeve 8. This latter is shaped towards the inner end of the tubular element with a centring taper for the hole in flange 7 and has an internal impression complementary to the ribbing of rod 10. In particular, for "DYWIDAG" or "GEWI" rods, the sleeve 8 will be made with long pitch internal pseudo-threading and will thus be an accessory element supplied with the bars themselves. However, for ease of assembly, it will preferably consist of two half sleeves locked together by a circlip or split washer.

The tubular elements 6, in zinc plated or stainless steel, aluminium or fibre glass will be assembled to the continuous rod 10 above all where a compression stress is envisaged, which can be determined beforehand by calculations, as has been stated above. However optional coverings for the rods can be provided in aluminium, rigid PVC and fibre cement having the same tubular shape and the function of protecting the bars against corrosion or fire, or with the simple aesthetic task of hiding the ribbing of the bars and to provide the desired colouring, although in this case spirally wound filiform coverings, around the bars and adhering to the ribbing, could be adopted. Tubular elements can also be used with the function of a template as a check of the free lengths of the rods themselves.

As regards the truncated bars 10' which provide for the diagonal rods, one of these is also shown in Fig. 2 fixed to the lower hemisphere 1a. Generally the bars 10' will have the same peripheral ribbing as the rods 10, in particular pseudo-threading of the "DYWIDAG" or "GEWI" type, but they could also have a smaller cross-section than these latter. Also shown in the drawing is a connecting sleeve 11 for connecting the end of the truncated bar 10' to the nodal sphere. In the case of "DYWIDAG" or "GEWI" the rod sleeve 11 will be double threaded (normal for the screwing in of a stud bolt 12, to be tightened into a threaded blind hole 13 provided in one of the solid hemispheres, and with pseudo-threading in the section to be fixed at the end of the rod 10'). A sleeve 11 of this type and relative lock-nut 11' are normally provided with a supply of "DYWIDAG" or "GEWI" rods. Should the rods have a different ribbing from long pitch pseudo-threading, the sleeves 11 will also have an adequate internal pattern, complementary to the ribbing of the rods, and may also, like the covers 8, be formed in two halves which may be blocked around the said rod. Each hemisphere 1a, 1b will have a certain number of radial threaded holes 13 of which only one has been shown in the figure, and this number will preferably be the maximum compatible with the structural integrity of the sphere, as a function of its size and of the diameter of each hole 13.

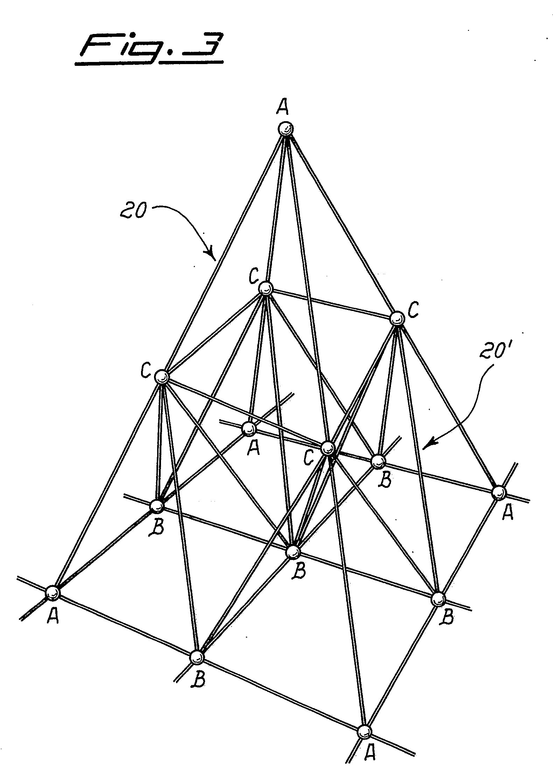

With reference to Fig. 3, this shows a link or loop of a semi-octahedron shape 20 built by using the structural elements of this invention and having its apexes in the knots A. Using the specialised structural calculation, in the hypothesis that semi-octahedron 20 is statically stressed, it is possible to divide it into sub-pyramids 20' in such a way that the structures are reduced to minor localised strains, while reducing the free length of the rods. This is obtained by the halving of the stringers and diagonal rods and with the additional use of nodal spheres B and C, identical to those used for knots A, although they could also be possibly provided by single piece spheres, even of a smaller size than the others.

According to this invention the sleeves 11 can in addition be used to control the length of the diagonal rods. Control is always by retraction and as a first step the theoretical length of the rod is determined which is then inserted during the initial phase of assembly as shortened, while subsequently the sleeves are tightened until reaching the required lenght. This makes it possible to insert diagonal bars into multi-layer spatial structural systems. On the other hand the speed and ease of assembly of stringers of continuous type is obvious in such a way that the pseudo-rods are a consequence of their modular distribution.

The assembly of the lattice structure obtained with the elements described above should preferably be carried out with the following operating methods, reported by way of an example. First of all the continuous ribbed bars used for the stringers are laid out on the ground, in crossed positions in the places determined by the free lengths of the rods, obtained by calculation and reproduced, for example, with the aid of dimensional templates or by using tubular rod coverings, as previously described, for this purpose.

Subsequently, in correspondence of each crossing of the stringers there are positioned the nodal hemispheres inserting the ribbing into the respective recessed seats 4, 4' of the lower and upper hemisphere, which are then locked together by tightening bolts of the contact flanges. The fitting of the sleeves is then carried out, which are already fixed to the ends of the truncated bars of the diagonals, by screwing down them to the stud bolts previously inserted in the threaded holes in the hemispheres, starting from the lower stringers and then completing the connections on the upper stringers which will then be hung "on high" as continuous crossed bars in correspondence with the nodal spheres with the same procedure as described for the lower stringers assembled on the ground. For reduction of strains in the tetrahedrons with the major stresses, the envisaged sub-pyramids can then be provided, with a halving of the free deflection lengths of the rods, as illustrated in Fig. 3. Previously the tubular rods will have been assembled onto the compressed bars, with their relative header flanges and the junction sleeves of the same pattern as the profile of the rod, or alternatively, the simple covering tubular elements.

As can be seen from the above, in the lattice spatial structure according to this invention welded connections are completely eliminated and, under the aspect of dimensional stability, it can be observed that thermal expansions are mainly absorbed by the bare bars, while those covered by tubular profiles absorb the expansions through the flanges and the joining sleeves. In this way a static system is obtained which reacts with uniform expansions, avoiding those points of conflict due to discontinuity in the distribution of masses. A fundamental characteristic of the system is the continuity of the upper and lower stringers of the links of plane structures, which are thus implemented according to the real, literal concept of the word, that is without continuous solutions in correspondence with the knot, where on the other hand, they cross over with superimposition creating "knots with virtual centres".

Possible additions and/or modifcations may be made by those skilled in the art to the embodiment of the nodal element according to this invention as described and illustrated above, and of the related rods with accessory elements for assembling the structure, without exceeding from the scope of the said invention. In particular it can be envisaged, for stringers that cross in the same nodal spheres, in longitudinal and transverse directions, bars of different diameters, according to the direction of the forces to which they are subject. In this case the relative hemispheres will have recesses 4 and 4' suitably sized, and thus not equal to each other, as was, on the other hand, illustrated in Fig. 1.

Another possible variation according to this invention is that which envisages double paired stringer bars, crossing each other or with a simple bar in correspondence with the nodal spheres when, for example, one of the stringers should have, as a result of forces a cross-section greater than the maximum envisaged for the bars used. These solutions may be adopted in any case whenever a diversification of cross-sections on the various structural categories of the stringers is necessary or in cases where it is not wished to use spheres of greater diameter for uniformity of supply.

## Claims

1. Nodal element for lattice spatial structures with ribbed profile rods, formed basically of solid sphere (1) and characterised by the fact of including two solid hemispheres (1a, 1b) flanged in correspondence of the diametral plane and able to be screwed together using said flanges (2), each formed with two recessed impressions (4, 4') at right angles to each other, so as to provide when screwed together, the support housings for two concurrent ribbed rods (10, 10') which cross each other in superimposition in correspondence with the centre of the sphere (1), from opposite positions relative to said diametral plane, said sphere (1) presenting on at least one hemisphere blind threaded radial holes (13) for fitting, the ends of the diagonal ribbed rods (10') by means of stud bolts (12) using connecting sleeves (11).

2. The nodal element of claim 1, characterised by the fact that said impressions (4, 4') are formed on each hemisphere (1a, 1b) respectively recessed and up raised relative to said flange (2), with a substantially U-shaped cross-section, so as to reproduce a complementary profile to the ribbing of the relative rods (10) to be blocked within their inside by the joining of the two hemispheres.

3. The nodal element of claim 1 or 2, in which the two impressions (4, 4') have different cross-sections to each other for the joining with continuous stringer rods (10) of different diameters.

4. The nodal element of claim 1 or 2, in which at least one of the impressions is shaped in such a way as to contain, a pair of continuous stringers (10) joined together, thus blocking the same.

5. The nodal element of any of the preceding claims, in which said continuous rods (10) for the stringers and the truncated rods for the diagonals (10') are formed of special long pitch pseudo-threaded bars, said profile being reproduced in the patterns (4, 4') and, for a certain depth, inside said connecting sleeve (11), the remaining length being threaded normally for screwing in the stud bolt (12).

6. A lattice spatial structure using the nodal elements of one of the preceding claims, including coaxial tubular elements (6) around one or more sections of any length of said stringer rods (10), with header flanges (7) centrally perforated and connecting and blocking sleeves (8) adapted to be inserted with their tapered end within the hole of the flange (7), being coaxial with the rod (10) upon which they are blocked and having their inner wall shaped with a complementary profile to that of the said rod.

7. The structure of claim 6, in which said sleeve (8) is formed of two distinct halves which can be blocked around the rod (10) by means of a ring or an elastic washer (9).

_Fig.1_

_Fig.2_

EP 0 337 961 A1

Fig.3

## DOCUMENTS CONSIDERED TO BE RELEVANT

| Category | Citation of document with indication, where appropriate, of relevant passages | Relevant to claim |
|---|---|---|
| A | GB-A- 704 758 (PYM)<br>* Page 3, lines 30-85; figures 9-15 * | 1 |
| A | BE-A- 823 969 (CILVETI)<br>* Page 6, lines 29-34; page 7, lines 1-2; figures 1,2 * | 1 |
| A,P | GB-A-2 197 417 (LAWRENCE)<br>* Page 2, lines 9-22; figures 1-2 * | 1,5 |
| A | US-A-3 864 049 (TAISABURO)<br>* Column 3, lines 42-68; column 4, lines 1-6; figures 3,7 * | 6,7 |
| A | FR-E- 86 183 (FERROTEST)<br>* Page 3, column 1, lines 20-57; figure 2 * | 1 |

CLASSIFICATION OF THE
APPLICATION (Int. Cl.4)

E 04 B 1/19
F 16 B 7/04

TECHNICAL FIELDS
SEARCHED (Int. Cl.4)

E 04 B
E 04 C
F 16 B

The present search report has been drawn up for all claims

| Place of search | Date of completion of the search | Examiner |
|---|---|---|
| THE HAGUE | 07-07-1989 | BARBAS A. |